**Europäisches Patentamt**

**European Patent Office**

**Office européen des brevets**

(19)

(11) Veröffentlichungsnummer: **0 242 403**
**B1**

(12) # EUROPÄISCHE PATENTSCHRIFT

(45) Veröffentlichungstag der Patentschrift:
**22.11.90**

(51) Int. Cl.⁵: **G06K 15/08, B41J 1/20**

(21) Anmeldenummer: **86104057.4**

(22) Anmeldetag: **25.03.86**

(54) Endlos umlaufende Bänder mit Kompensation einer Verschiebung senkrecht zu ihrer Bewegungsrichtung.

(43) Veröffentlichungstag der Anmeldung:
**28.10.87 Patentblatt 87/44**

(45) Bekanntmachung des Hinweises auf die Patenterteilung:
**22.11.90 Patentblatt 90/47**

(84) Benannte Vertragsstaaten:
**DE FR GB**

(56) Entgegenhaltungen:
**FR-A- 2 199 290**
**GB-A- 2 159 993**
**US-A- 3 052 408**
**US-A- 3 221 302**

(73) Patentinhaber: **IBM DEUTSCHLAND GMBH, Pascalstrasse 100, D-7000 Stuttgart 80(DE)**
(84) Benannte Vertragsstaaten: **DE**

(73) Patentinhaber: **International Business Machines Corporation, Old Orchard Road, Armonk, N.Y. 10504(US)**
(84) Benannte Vertragsstaaten: **FR GB**

(72) Erfinder: **Fischer, Ludwig, Römerweg 84, D-7033 Herrenberg(DE)**
Erfinder: **Goldrian, Gottfried, Gutacherweg 18, D-7030 Böblingen(DE)**
Erfinder: **Zimmermann, Volker, Dr., Banaterstrasse 51, D-7032 Sindelfingen(DE)**

(74) Vertreter: **Blutke, Klaus, Dipl.-Ing., Schönaicher Strasse 220, D-7030 Böblingen(DE)**

## Beschreibung

Die Erfindung betrifft eine Anordnung zur Messung einer Verschiebung eines umlaufenden Endlosbandes mit einer Spur von Abtastmarken. Die Verschiebung des Endlosbandes erfolgt senkrecht zu seiner Bewegungsrichtung. Außerdem betrifft die Erfindung eine Anordnung zur Kompensation einer solchen unerwünschten Verschiebung.

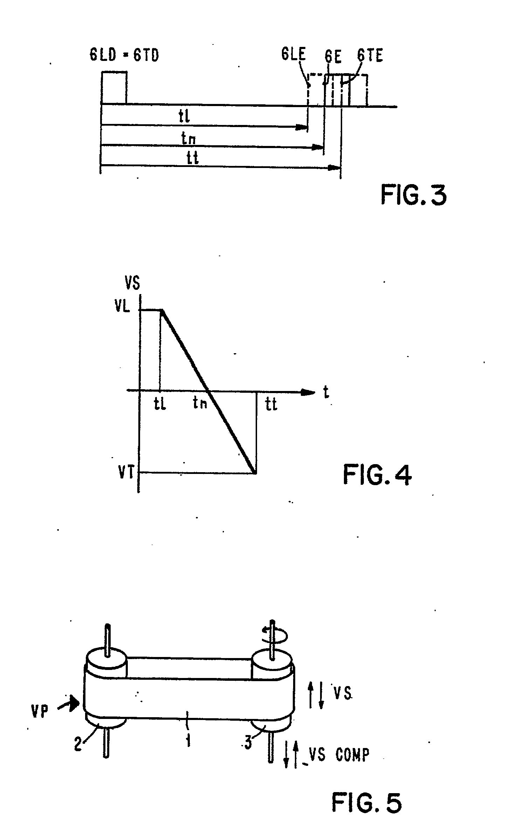

Eine vorzugsweise Ausführungsform der Erfindung bezieht sich auf Anschlagdrucker mit einem horizontal umlaufenden Typenband. Üblicherweise wird dieses Typenband 1 wie in Fig. 5 dargestellt, um eine Antriebs- 2 und Laufrolle 3 geführt. Dabei können sich unerwünschte Vertikalverschiebungen des Bandes in Richtung VS und entgegengesetzt dazu ergeben. Diese unerwünschten Vertikalverschiebungen müssen durch entgegengesetzte Ausgleichsbewegungen VS COMP kompensiert werden.

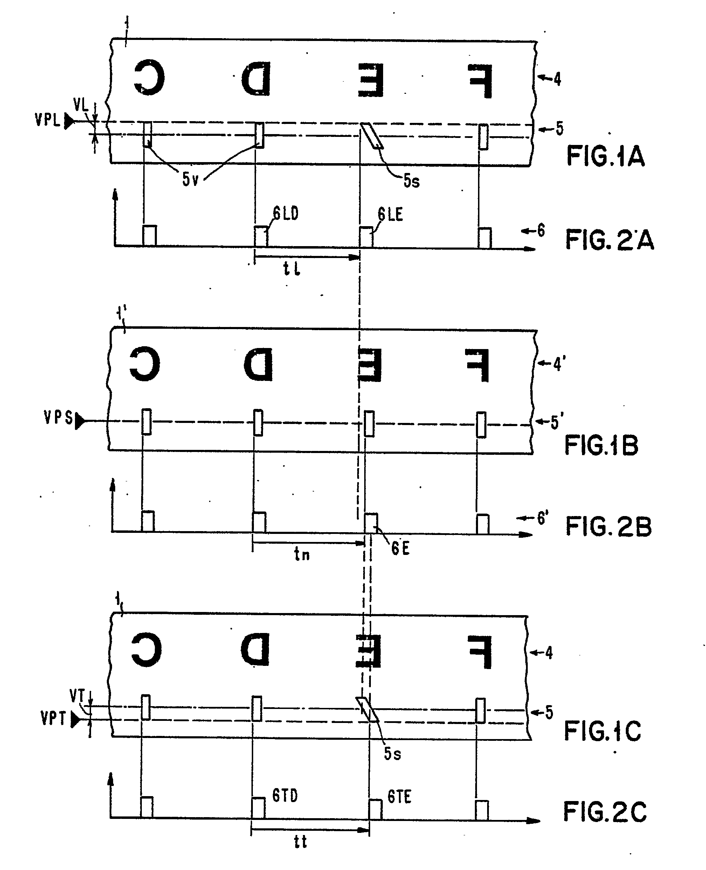

Üblicherweise sind auf Typenbändern 1 von Anschlagdruckern eine Spur 4 von Zeichen und eine Spur 5 von sog. den Zeichen jeweils zugeordneten Abtastmarken vorgesehen (Fig. 1A). Diese Abtastmarken können auf elektromagnetische oder andere herkömmliche Weise abgetastet werden. Bei der Abtastung dieser Abtastmarken durch einen Abtastmarkensensor in vertikaler Sollposition VP (Fig. 5) werden Abtastsignale 6 erzeugt, von denen auf das Auftreten bestimmter Zeichen an bestimmten Druckpositionen geschlossen werden kann. Dadurch wird die zur Druckersteuerung erforderliche Aussage gewonnen, zu welchem Zeitpunkt sich ein bestimmtes Zeichen an einer bestimmten Stelle der Druckzeile befindet. Eine derartige Information ist Vorraussetzung für das Abdrucken eines gewünschten Zeichens an einer bestimmten Stelle des Aufzeichnungsträgers.

Eine Vertikalverschiebung des Typenbandes muß aus Gründen fluchtender Zeilen und eines gleichmäßigen Zeilenabstandes und insbesondere aus Gründen einer exakten Ausrichtung der Druckhämmer auf die Zeichenspur erkannt und unterdrückt werden.

Beim Drucker des Typs IBM 4245 erfolgte eine Festlegung des Typenbandes in eine bestimmte vertikale Position durch geringe Achsenverdrehung der Lauf- bzw. Antriebsrolle für das Typenband. Für die untere Typenbandkante bilden Kugellager einen Anschlag. Dieses Verfahren hat eine begrenzte Genauigkeit, die Achseneinstellung ist sehr schwierig.

In anderen Druckern z.B. vom Typ IBM 4248, wird die Vertikalposition des Typenbandes durch einen Regelkreis festgelegt. Dabei wird ein spezieller Positionssensor zur Messung der Vertikalposition des Typenbandes verwendet. In Abhängigkeit von der Abweichung von der vertikalen Sollposition wird die Lage des Typenbandes verstellt.

In der FR-A 2 199 290 ist eine Anordnung zur Messung eines umlaufenden Endlosbandes senkrecht zu seiner Bewegungsrichtung mit einer Spur von Abtastmarken beschrieben, wobei die Abtastmarken von einer in einer definierten Position angeordneten Abtastvorrichtung zur Erzeugung von Abtastsignalen abgetastet werden und die Abtastmarken äquidistant angeordnet sind.

Die Größe des Abtastsignals ist ein Maß für die Verschiebung des Bands senkrecht zu seiner Bewegungsrichtung.

Bei dieser Anordnung wird ein Amplitudensignal erzeugt, welches proportional der Höhenverschiebung des Typenbandes ist. Eine solche Lösung ist jedoch mit dem Nachteil größerer Ungenauigkeit behaftet, da in der Analogtechnik eine Vielzahl äußerer Parameter (Temperatur, Toleranzen der Bauelemente etc.) Schwankungen bedingt, die sich nachteilig auf die Genauigkeit auswirken. Dies gilt insbesondere auch für Referenzwerte.

Aus der US-A 3 052 408 ist ein Gerät bekannt, welches den Versatz von zu transportierenden Belegformularen korrigiert. Die dabei praktizierte Lösung mit zwei Paaren von Abtastmarken soll Auswirkungen von Geschwindigkeitsschwankungen beim Dokumententransport eliminieren.

Es ist Aufgabe der Erfindung, die Vertikalposition eines horizontal umlaufenden Typenbandes mit höherer Genauigkeit als bisher möglich auf einfache Weise unter Inanspruchnahme seiner Zeitmarkenspur zu messen. Dadurch wird ein zusätzlicher Positions-Sensor überflüssig. Diese Aufgabe wird in vorteilhafter Weise durch die im Anspruch 1 angegebenen Maßnahmen für eine Digitallösung erfüllt. Bei einer Digitallösung mit einer Pulskette lassen sich Pulsverschiebungen mit größerer Genauigkeit als bei Analoglösungen erfassen. Weitere vorteilhafte Ausgestaltungen der Erfindung, deren Aufgabe es auch ist, eine unerwünschte Vertikalverschiebung zu kompensieren, sind den Unteransprüchen zu entnehmen. Ein Ausführungsbeispiel der Erfindung ist in den Zeichnungen dargestellt und wird im folgenden näher beschrieben. Es zeigen:

Fig. 1A: eine auszugsweise schematische Darstellung eines Typenbandes mit einer schräggestellten Abtastmarke in einer nach unten,

Fig. 1C in einer nach oben verschobenen Position.

Fig. 1B eine auszugsweise schematische Darstellung eines herkömmlichen Typenbandes in einer vertikalen Sollposition.

Fign. 2A, 2B, 2C schematische Darstellungen der Abtast signale in Zuordnung zu dem Typenband gemäß Fig. 1A, Fig. 1B und Fig. 1C;

Fig. 3 eine auszugsweise schematische Darstellung des zeitlichen Abstandes zwischen den Abtastsignalen der schräg gestellten Abtastmarke in unterschiedlichen Vertikalpositionen und ihrer Nachbarabtastmarke;

Fig. 4 den Funktionsverlauf der Vertikalverschiebung als Funktion des zeitlichen Abstandes zwischen den Abtastsignalen der schräg gestellten Abtastmarke in unterschiedlichen Vertikalpositionen und ihrer Nachbarabtastmarke;

Fig. 5 eine schematische, perspektivische Darstellung eines umlaufenden Typenbandes mit einer Lauf- und einer Antriebsrolle (Stand der Technik).

Fig. 1B zeigt eine auszugsweise schematische Darstellung eines herkömmlichen Typenbandes 1' in einer vertikalen Sollposition. Üblicherweise werden die Abtastmarken in der Spur 5' in einer mit VPS gekennzeichneten Soll-Vertikalposition des Bandes abgetastet. Diese Vertikalposition ist auf die Mitte der Abtastmarken in vertikaler Erstreckung ausgerichtet. Bei einer Vertikalverschiebung des Bandes um den Betrag VL nach unten (Fig. 1A) erfolgt die Abtastung der Abtastmarken in der Vertikalposition VPL. Die Lage des Abtastmarkensensors bleibt bei einer Bandverschiebung unverändert; es ergibt sich jedoch eine vertikale Relativverschiebung zwischen Abtastmarkensensor und Typenband. Die Abtastung erfolgt in Fig. 1A im oberen Bereich der Abtastmarken (gestrichelte Linie) und nicht mittig wie in Fig. 1B. Eine Bandverschiebung nach oben (Fig. 1C) um den Betrag VT bewirkt, daß die Abtastung der Abtastmarken in der Position VPT erfolgt (gestrichelte Linie) und sich somit auf deren unteren Bereich bezieht.

Nach dem Stand der Technik gemäß Darstellung in Fig. 1B liegen die Abtastmarken in einer Horizontalspur 5'. Jede Abtastmarke erstreckt sich auch in vertikaler Richtung. Bei einer derartigen Anordnung der Abtastmarken ist es nicht möglich, eine Vertikalverschiebung des Bandes aus den Abtastsignalen abzuleiten. Die Figuren 2A, 2B und 2C zeigen eine schematische Darstellung der Abtastsignale in Zuordnung zum Typenband nach Fig. 1A, 1B und 1C. Bei äquidistanten Zeitmarken gemäß Fig. 1B ergeben sich Abtastsignale 6', deren gegenseitiger zeitlicher Abstand gleich ist und tn beträgt. Das Auftreten der Vorderkante der Abtastsignale wird von der Vorderkante der Abtastmarken abgeleitet.

Nach der Erfindung wird wie aus den Darstellungen Fig. 1A bzw. Fig. 1C zu ersehen ist, eine 5s der Abtastmarken in der Horizontalspur 5 schräg angeordnet. Diese schräge Abtastmarke ist dem Zeichen E zugeordnet. Die Schräge bedingt, (siehe Fig. 1A in Verbindung mit Fig. 2A) daß sich bei einer Abtastung entlang der VPL Position das Abtastsignal zu einem früheren Zeitpunkt bildet, als es bei einer Abtastung gem. Fig. 1B der Fall wäre. Der Abstand des dem Zeichen D zugeordneten Abtastsignals 6LD zu dem Abtastsignal 6LE für das Zeichen E bei einer Vertikalverschiebung des Bandes gem. Fig. 1A ist mit tl gekennzeichnet. Bei einer Vertikalverschiebung des Bandes gemäß Fig. 1C ergibt sich das Abtastsignal 6TE für das Zeichen E zu einem späteren Zeitpunkt als es im Fall einer Abtastung gem. Fig. 1B der Fall wäre. Der Abstand des dem Zeichen D zugeordneten Abtastsignal 6TD zu dem Abtastsignal 6TE ist mit tt gekennzeichnet. Würde die Vertikalverschiebung des Typenbandes mit der schräg gestellten Zeitmarke für das Zeichen E Null betragen, so ergäbe sich ein Signalabstand von tn (wie auch im Fall gem. Fig. 1B). Dabei wird selbstverständlich unterstellt, daß die Vorderkante der schrägen Abtastmarke in VPS Position mit der Vorderkante der gedachten vertikal ausgerichteten Abtastmarke übereinstimmt. Das Auftreten der Abtastsignale 6LE und 6TE zu unterschiedlichen Zeitpunkten rührt daher, daß im ersten Fall der Abtastsensor in Höhe der VPL Position zu einem früheren Zeitpunkt auf die Vorderkante der schrägen Abtastmarke 5s trifft als im zweiten.

Dadurch ist es möglich, aus dem zeitlichen Abstand des Abtastsignales dieser schräg gestellten Abtastmarke zu einem Abtastsignal einer benachbarten nicht schräg gestellten Zeitmarke auf die Höhe der Vertikalverschiebung zu schließen. Bei einer geradlinigen Schräge der Abtastmarke besteht zwischen der Zeitdifferenz der Abtastsignale und dem Wert der Vertikalverschiebung des Typenbandes ein linearer Zusammenhang. Ein nicht linearer Zusammenhang ergäbe sich, wenn die Abtastmarke z. B. gekrümmt verlaufen würde.

Fig. 3 zeigt eine auszugsweise schematische Darstellung des zeitlichen Abstandes zwischen den Abtastsignalen der schräg gestellten Abtastmarke und der unterschiedlichen Vertikalposition und ihrer Nachbarabtastmarke.

Die für die Bestimmung der Vertikalverschiebung wichtigen Abtastsignale für die Fälle gem. Figuren 2A, 2B und 2C sind in Fig. 3 in einem einzigen Zeitdiagramm wiedergegeben.

Fig. 4 zeigt den Funktionsverlauf der Vertikalverschiebung VS als Funktion des zeitlichen Abstandes t zwischen den Abtastsignalen der schräg gestellten Abtastmarke in unterschiedlichen Vertikalpositionen und ihrer Nachbarabtastmarke. Die in dieser Darstellung verwendeten Bezeichnungen tl, tn und tt sind die gleichen wie sie in den Figuren 2A, 2B, 2C oder Fig. 3 verwendet wurden. Die Bezeichnungen VL und VT entsprechen denen der Fig. 1A und 1C. Aus dem Funktionsverlauf geht hervor, daß bei einer fehlenden Vertikalverschiebung VS = 0 die stark ausgezogene Gerade die Abzisse bei dem Wert tn schneidet. Den Koordinatenwerten VL bzw. VT entsprechen die zugehörigen Abzissenwerte bei tl und tt. Aufgrund des linearen Zusammenhanges der Funktion VS = f(T) läßt sich für jeden zwischen tl und tt liegenden Wert der zugehörige Wert für die Vertikalverschiebung ermitteln (z.B. durch einen Zählerlauf für diesen Zeitwert). Unter Kenntnis dieses Wertes kann jedoch die Vertikalverschiebung des Bandes durch einen gleich großen aber entgegengesetzten Wert rückgängig gemacht werden.

Dazu ist es erforderlich, wie in Fig. 5 angedeutet, den Bandantriebs- 2 und Laufrollenmechanismus 3 um einen Kompensationswert entgegengesetzt zur aufgetretenen Vertikalverschiebung des Typenbandes zu verschieben. Eine solche Verschiebung kann mit Hilfe einer Schrittmotorsteuerung (nicht dargestellt) vollzogen werden.

**Patentansprüche**

1. Anordnung zur Messung einer Verschiebung eines gleichmäßig umlaufenden Endlosbandes senkrecht zu seiner Bewegungsrichtung mit einer Spur von äquidistant angeordneten Abtastmarken, wobei die Abtastmarken (5) von einer in einer definierten Position angeordneten Abtastvorrichtung zur Erzeugung von Abtastsignalen abgetastet werden, dadurch gekennzeichnet, daß eine Abtastmarke (5s) nicht äquidistant angeordnet ist und diese Abtastmarke (5s) zur Verschiebungsmessung des Bandes gegenüber den anderen Abtastmarken eine Schräglage einnimmt, daß sich bei einer Verschiebung des Bandes der digitalisierte zeitliche Abstand der Abtastsignale (6LE (6TE)); (6LD (6TD)), welche der schrägen Abtastmarke (5s) und der dieser benachbarten Abtastmarke zugeordnet sind, gegenüber dem digitalisierten zeitlichen Abstand (tn) der äquidistant benachbarten Abtastmarken verändert, und daß dieser Änderungswert ein Maß für die Verschiebung des Bandes senkrecht zu seiner Bewegungsrichtung ist.

2. Anordnung nach Anspruch 1, dadurch gekennzeichnet, daß das Band ein umlaufender über eine Antriebs- (2) und Laufrolle (3) geführter Typenträger (1) eines Anschlagdruckers ist.

3. Anordnung nach Anspruch 2, dadurch gekennzeichnet, daß der Typenträger ein Typenband ist.

4. Anordnung nach einem der Ansprüche 1 bis 3, dadurch gekennzeichnet, daß das Typenband (1) horizontal umläuft und eine Horizontalspur (5) von Abtastmarken aufweist, welche vertikal ausgerichtet sind und daß die vertikale Ausdehnung der Abtastmarken mindestens so groß wie die maximal mögliche Vertikalverschiebung (VL + VT) des Typenbandes (1) ist.

5. Anordnung zur Kompensation der Verschiebung des Bandes senkrecht zu seiner Bewegungsrichtung dessen Messung nach einem der Ansprüche 1 bis 4 erfolgt, dadurch gekennzeichnet, daß die Verschiebung (VS) des Bandes als Steuergröße für die Kompensation (VSCOMP) der Verschiebung durch eine Stelleinrichtung erfolgt.

6. Anordnung nach Anspruch 5, dadurch gekennzeichnet, daß die Stelleinrichtung für ein horizontal über Antriebs-(2) und Laufrolle (3) umlaufendes Typenband ein die Vertikalposition des Typenbandes (1) verstellender Schrittmotor ist.

## Claims

1. Arrangement for measuring a displacement of a uniformly revolving endless band, comprising a track of equidistantly positioned sensor marks, perpendicular to its direction of movement, the sensor marks (5) being sensed by a sensor, arranged at a defined position, for generating sense signals, characterized in that one sensor mark (5s) is non-equidistantly positioned, this sensor mark (5s) assuming an oblique position relative to the other sensor marks for measuring the band's displacement, that, when the band is displaced, the digitized time spacing of the sense signals (6LE (6TE)); (6LD (6TD)), associated with the oblique sensor mark (5s) and its adjoining sensor mark, is changed over the digitized time spacing (tn) of the equidistant adjoining sensor marks, and that the magnitude of change is a measure of the band's displacement perpendicular to its direction of movement.

2. Arrangement according to claim 1, characterized in that the band takes the form of a revolving impact printer type carrier (1) guided over drive and guide pulleys (2 and 3).

3. Arrangement according to claim 2, characterized in that the type carrier is a type band.

4. Arrangement according to any one of the claims 1 to 3, characterized in that the type band (1) moves horizontally and comprises a horizontal track (5) of sensor marks which are vertically aligned, and that the vertical extension of the sensor marks is at least of the same value as the maximum vertical displacement (VL + VT) of the type band (1).

5. Arrangement for compensating for the displacement of the band perpendicular to its direction of movement, which is measured according to any one of the claims 1 to 4, characterized in that the displacement (VS) of the band as a control variable for displacement compensation (VS COMP) is effected by a control element.

6. Arrangement according to claim 5, characterized in that the control element for a type band horizontally moving over a drive and a guide pulley (2 and 3) is a stepper motor controlling the vertical position of the type band (1).

## Revendications

1. Dispositif pour la mesure d'un décalage d'une bande sans fin tournant uniformément perpendiculairement à sa direction de défilement avec une piste de repères de lecture disposés à égales distances, les repères de lecture (5) étant lus par un dispositif de lecture placé dans une position définie pour engendrer des signaux de lecture, caractérisé en ce qu'un repère de lecture (5s) n'est pas placé en position équidistante et ce repère de lecture (5s) occupe une position oblique pour la mesure du décalage de la bande par rapport aux autres repères de lecture, en ce que, lors d'un décalage de la bande, l'intervalle de temps numérisé des signaux de lecture (6LE (6TE)); (6LD (6TD)) qui correspondent au repère de lecture oblique (5s) et au repère de lecture qui en est voisin varie par rapport à l'intervalle de temps numérisé (tn) des repères de lecture voisins équidistants, et en ce que la valeur de cette variation est une mesure pour le décalage de la bande perpendiculairement à sa direction de défilement.

2. Dispositif selon la revendication 1, caractérisé en ce que la bande est un porte-caractères rotatif (1) d'une imprimante à impact guidé de façon à passer sur un rouleau d'entraînement (2) et un rouleau entraîné (3).

3. Dispositif selon la revendication 2, caractérisé en ce que le porte-caractères est une bande à caractères.

4. Dispositif selon l'une des revendications 1 à 3, caractérisé en ce que la bande à caractères (1) circule horizontalement et comporte une piste horizontale (5) de repères de lecture qui sont orientés verticalement, et en ce que l'étendue verticale des repères de lecture est au moins égale au décalage vertical maximum possible (VL + VT) de la bande à caractères (1).

5. Dispositif pour compenser le décalage de la bande perpendiculairement à sa direction de défilement, dont la mesure est effectuée selon l'une des revendications 1 à 4, caractérisé en ce que le décalage (VS) de la bande est effectué, en tant que grandeur de commande pour la compensation (VSCOMP) du décalage, par un dispositif de réglage.

6. Dispositif selon la revendication 5, caractérisé en ce que le dispositif de réglage pour une bande à caractères circulant horizontalement en passant par le rouleau d'entraînement (2) et le rouleau entrainé (3) est un moteur pas à pas modifiant la position verticale de la bande à caractères (1).

FIG.1A

FIG.2A

FIG.1B

FIG.2B

FIG.1C

FIG.2C

6LD = 6TD        6LE   6E   6TE

tL

tn

tt

FIG.3

VS

VL

tL   tn     tt    t

VT

FIG.4

VP

VS

2     1     3     VS COMP

FIG.5